(19) Europäisches Patentamt
European Patent Office
Office européen des brevets

(11) **EP 1 046 930 B1**

(12) **EUROPEAN PATENT SPECIFICATION**

(45) Date of publication and mention
of the grant of the patent:
**01.08.2007 Bulletin 2007/31**

(51) Int Cl.:
***G01V 1/36*** *(2006.01)*     ***G01V 1/42*** *(2006.01)*

(21) Application number: **00201332.4**

(22) Date of filing: **13.04.2000**

(54) **Process for improving the bit seismic signal using drilling parameters**

Verfahren zur Verbesserung des seismischen Signals von einem Bohrmeisel unter Verwendung der Bohrparameter

Procédé pour améliorer le signal sismique d'une pointerolle utilisant les paramètres de forage

(84) Designated Contracting States:
**DK GB IE IT PT**
Designated Extension States:
**AL RO**

(30) Priority: **20.04.1999 IT MI990814**

(43) Date of publication of application:
**25.10.2000 Bulletin 2000/43**

(73) Proprietors:
• **ENI S.p.A.**
**00144 Roma (IT)**
• **Istituto Nazionale di Oceanografia e di Geofisica Sperimentale**
**34010 Sgonico (Trieste) (IT)**

(72) Inventors:
• **Miranda, Francesco**
**24121 Bergamo (IT)**
• **Abramo, Ferdinando**
**20097 San Donato Milanese,**
**Milan (IT)**
• **Poletto, Flavio**
**34170 Gorizia (IT)**
• **Comelli, Paolo**
**33100 Udine (IT)**

(74) Representative: **De Gregori, Antonella et al**
**Ing. Barzano' & Zanardo Milano S.p.A.**
**Via Borgonuovo 10**
**20121 Milano (IT)**

(56) References cited:
US-A- 4 561 074          US-A- 4 954 998
US-A- 5 050 130          US-A- 5 372 207

• **RECTOR J.W. ET AL.: "The use of drill-bit energy as a downhole seismic source" GEOPHYSICS; SOCIETY OF EXPLORATION GEOPHYSICISTS, vol. 56, no. 5, 1 May 1991 (1991-05-01), pages 628-634, XP002272286**

**Description**

The present invention relates to a process for improving the Signal/Noise ratio in the preparation of vertical seismic profiles (VSP) which supply information on subsoil geological formations to be subjected to drilling, using as seismic source the vibrations produced by the drilling bit.

Adopted for drilling wells, this technique, by means of signal reflections on lithologic formation layers, provides a representation of the subsoil adjacent to the drilling well. The position of the various subsoil layers is reconstructed on the basis of the delay times with which the signals return to the receivers.

The interpretation methods of the signals reflected have undergone considerable development, also with the help of computer processing, and allow information to be obtained on the formations being subjected to drilling and on the drilling progress itself.

The conventional VSP prospecting method involves interrupting the drilling operation, extracting the drill-string and the bit, introducing one or more geophone detectors into the drilled well and generating on the surface, or at low depths and close to the well, one or more acoustic impulses (for example by exploding explosive charges) and measuring the signals which reach the geophones situated inside the well. With this operating technique, there are no doubts as to the primary signal generated on the surface, but there are considerable disadvantages. It is, in fact, very costly, also because it requires the interruption of the drilling operations for a long period of time and can therefore only be applied very few times during the drilling. Furthermore the extraction and reintroduction of the drilling battery is not without risks and therefore requires particular safety procedures and precautions.

More recently proposals have been made to effect these measurements using, as seismic source, the same signal generated by the drilling bit during drilling.

For example the measurement systems described in the following patents can be mentioned: US-A-4,965,774 of Atlantic Richfield, US-A-4,862,423, US-A-4,954,998 and US-A-4,964,087 of Western Atlas Int., US-A-4,718.048 of Elf Aquitaine, US-A-5,050,130 of Gas Research Inst. and US-A-5,511,038 of AGIP S.p.A. and the Geophysical Experimental Observatory, US-A-4,922,362 (Schlumberger).

The use of the drilling bit itself as seismic source has the advantage of allowing surface measurements to be taken during the drilling without interfering with the field activities and collecting a large amount of data at a low cost and with low risks, with frequent or even continuous measurement campaigns. The signal generated by the bit, however, has the disadvantage of being affected by propagation disturbances and becoming continuous over a period of time. It is therefore very difficult to establish which is the reliable signal generated by the bit to allow useful comparison with the return signals registered by the probes positioned on the ground surrounding the drilling well. For this reason the signal is continuously collected, checked and processed by means of specific on-site operating units ("while drilling" seismic cabin).

In other terms, the technical problem presented when using this method is the elimination, to the largest possible extent, of the noise component present in the seismic signal measurements of the bit.

The Signal/Noise ratio can be improved using the technique of summing up the contribution of a large amount of data collected by the measuring probes over a reasonable period of time. Even this method however has its drawbacks. In fact, the duration of the time period over which the data can be summed up, is limited by the fact that the bit continues with time to penetrate deeper and deeper. There are consequently applicative limits of a practical nature; for example, the drilling of softer or less compact layers generates weaker signals and the measurements must be continued for longer times to enable them to be significant. In this case the drilling is faster and, owing to the excessive penetration of the bit during the measurement, there are limitations in the time duration so as not to lose space resolution.

In addition, the disturbance often prevents a clear reception of the bit signal and can only be partially eliminated with the method of summing up the contribution of numerous measurements repeated over reasonable periods of time; the result which can be obtained is an improved, but still not sufficiently high, Signal/Noise ratio.

A process has now been found which allows a great improvement in the Signal/Noise ratio by the use of information available on-site. In fact, the drilling parameters measured on the surface (by the "mud logging" Company) provide a description of the static and dynamic conditions of the drilling process. The surrounding surface conditions described by these parameters influence the bit signal and are, in turn, linked to the drilling conditions at the bottom of the hole and influenced by the variability of the dynamic process and type of rock drilled. It is therefore possible to use these parameters to examine the Signal and Noise conditions and improve the seismic signal of the bit.

The process of the present invention is based on the method of summing up by weight the contribution of numerous data collected by the measurement probes over a period of time. This is achieved by using coefficients which only amplify records having a high Signal/Noise ratio, and also separating the records which prevalently contain noise. The weighed sum is effected by analysis of the data selected and re-ordered according to various drilling parameters measured during the collection of the bit signal.

This leads to a better identification of the bit signal as well as to a significant identification of undesired noises. Typical undesired noises which are consistently registered in the final seismograms are the noise of the work-site activities and derrick vibrations.

In accordance with this, the present invention relates to a process for improving the Signal/Noise ratio in the preparation of vertical seismic profiles (VSP) which provide information on the geological formations of the subsoil to be subjected to drilling, using as a signal the vibrations produced by the drilling bit used as seismic source; an extremely representative measurement of the above signal (pilot signal) and the measurements of the signals transmitted into the ground and reflected on the layers (seismic signals) being effected by a series of receivers which form the seismic line, the above process comprising the practically simultaneous collection of:

- seismic and pilot signals (A), preferably cross-correlated with each other and optionally deconvolved, thus obtaining seismic tracks in which the signal is disturbed by noise;
- drilling parameters (B) relating to the signals (A), characterized in that:

the signals (A), obtained with repeated measurements for the same depth range, preferably re-arranged and analyzed according to one or more drilling parameters (B) or their relative combinations, are partially or totally summed up by weight, on the basis of one or more drilling parameters (B), or relative combinations of the above parameters, thus obtaining an improvement in the signal with respect to noise, and a more distinct separation thereof.

The parameters (B) which describe the instantaneous drilling state during the measurements (A), are collected at regular intervals during the drilling itself, for example every second. They can also be sub-sampled to supply information in the time interval relating to the single registration (A) of the group of multi-seismic recordings (A) collected for the same depth level. The time duration of the single registration (A) may, for example, be 24 seconds, and the average value of (B) will therefore be obtained on the corresponding 24 seconds; in this way there will be a characteristic description of the whole registration of 24 seconds during which the average value was calculated. This time is, in fact, significantly long with respect to the arrival delays of the signals which are distributed in the drilling plant from the surface to the bottom and viceversa, and in the ground, delays which are in the order of seconds. It is therefore correct to consider the measurements (A) and (B) as being contemporaneous.

Typical examples of drilling parameters (B) are indicated in Table 1.

<div align="center">

TABLE 1

| Parameter | Measurement unit |
|---|---|
| Date | |
| Hour | |
| Depth | meters |
| Vertical depth | meters |
| Bit depth | meters |
| Kelly position | meters |
| ROP (Rate of Penetration) | meters/hour |
| RPM | revs/minute |
| WOB (weight on bit) | Tons |
| Hookland | Tons |
| Torque | Kg/m |
| Pump pressure | $Kg/cm^3$ |
| Mud in weight | gr/l |
| Mud out weight | gr/l |
| Flow in | 1/m |
| Flow out | 1/m |
| Pump tot | 1/m |
| Bit distance | m |
| String length | m |
| String weight | Tons |

</div>

In the preferred embodiment, the drilling parameters (B) used in the process of the present invention are those which describe the dynamic drilling conditions, for example torque, weight on bit (WOB), rate of penetration (ROP), rotation rate (RPM), mud flow (FLOW IN/OUT). Combinations of the above parameters can also be used.

In the process of the present invention, the criteria with which the most representative signals can be identified are based on the analysis of the organized (re-arranged) data with the drilling parameters. It is thus possible to more effectively analyze the correspondences between the drilling parameters (B) and the signal and noise levels in the seismic data (A) obtained with the bit in the various operating contexts. From these correspondences, the criteria for improving the sum of the data collected for the same drilling level are determined, for example by summing up the correlations of different tens of registrations of 24 seconds obtained in a short penetration interval of the bit.

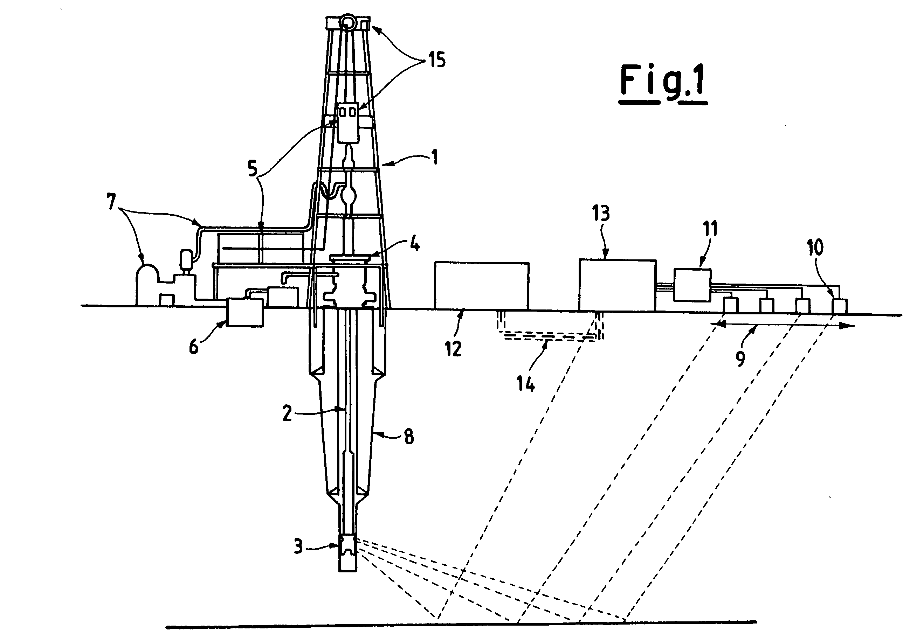

The present invention can be better illustrated by referring to figure 1. Said figure 1 illustrates the rotary table system, as the means of activating the rotation of the battery of rods. This system however, as is known to experts in the field, is equivalent to the so-called "top drive" system.

In figure 1 above:

(1) indicates the structure of the drilling derrick;
(2) indicates the battery of drill-string with the drilling bit at the end;
(3) indicates the drilling bit;
(4) indicates the rotary table which activates the rotation of the drill-string (2); the rotary table system illustrated is equivalent to the so-called "top drive" system;
(5) indicates the electric driving motor of the rotary table (4); if a "top drive" system is present, the motor is inside the system itself;
(6) indicates the mud tank;
(7) indicates the transfer pump of the mud which flows inside the battery (2) to the bit where it is discharged and rises along the well;
(8) indicates the well dug by the bit (3) as it descends into the ground, in which the mud introduced by the pump (7) rises;
(9) indicates a line of measurement probes (A) (10) which receive both direct and reflected seismic signals coming from the bit seismic source which pass through the ground and are collected and registered with the recorder (11). The line or lines of measurement probes are simply indicated as a seismic line and are generally situated at a certain distance from the drilling site, according to optimization criteria which make it possible to obtain seismic data from quite an extensive area around the drilling well. This seismic line generally consists of geophones, when operating on dry land, or hydrophones, in the case of offshore drilling;
(12) indicates the "mud logging" cabin for the acquisition and control of the drilling parameters (B), some of which are illustrated in Table 1;
(13) indicates the control cabin of the seismic data while drilling;
(14) indicates a connection line between the "mud-logging" cabin (12) and the "while-drilling" seismic cabin (13);
(15) indicates one or more pilot probes (A) situated in the work-site for measuring the bit reference signal to be used in the cross-correlation.

In an embodiment, the process of the present invention comprises the following steps:

1) Cross-correlation of the seismic signals and pilot signal (A), collected by repeated measurements for the same depth range, and possible deconvolution of these, thus obtaining seismic tracks (1);
2) Identification of the arrival time of the direct wave in the tracks (1), the above identification being effected by selecting the tracks (1) of one or more channels of the seismic line, or using a representative channel synthesized from various channels of the seismic line (focalized signal), in order to obtain more representative tracks (2); optional alignment of the tracks (2) in relation to the times thus identified;
3) Arrangement, and possible representation, of the tracks (2), relating to a given drilling range, in accordance with the values of one or more of the corresponding drilling parameters (B) or relative combinations, for a certain drilling range, thus obtaining arranged tracks (3);
4) Channel by channel summing up with respect to appropriate subsets of the arranged tracks (3) thus obtaining summed-up tracks (4);
5) Measurement of the Signal/Noise ratio for the summed-up tracks (4) and identification, among the subsets of point (4), of subset(s) forming the maximum value of the Signal/Noise ratio;
6) Summing up, channel by channel and for the same depth range, of the tracks of point (2) or equivalently of point (1) according to the subsets identified in step (5), thus obtaining the optimum sum;
7) Possible calculation of the noise range with the partial or total sum of the complementary range and identification of the associated operating conditions; possible subsequent subtraction of undesired noise, identified from the complementary range, from the signal selected with the optimum sum of (6), thus reducing the residual noise to the maximum;
8) optional application of points 1 to 6, or 1 to 7, for the various drilling levels.

The process of the present invention is described hereunder, considering, for the sake of simplicity, the case of a single pilot.

With respect to step (1), this consists in the cross-correlation of the pilot signal $p_i(t)$ and seismic signals $g_{ik}(t)$, measured on the surface at the measurement points k = 1, ..., F, and in the possible deconvolution of these. These measurements are carried out at time intervals of a suitable length for measuring the seismic waves, repeated i-times (i = 1,...,N) for the same (short) depth range of the bit (depth level). The time (t) can be a discrete variable. <,> being the symbol relating to the correlation operator, the correlated signals are:

$$c_{ik}(t) = <g_{ik}(t),\ p_i(t)> \qquad (equ.1)$$

or, maintaining the same symbol, the correlated and deconvolved signals are:

$$c_{ik}(t)\ =\ d_i\ *\ <g_{ik}(t),\ p_i(t)> \qquad (equ.2)$$

$d_i$ being the deconvolution operator for the registration number "i" and '*' indicating the convolution operator symbol. The cross-relation and deconvolution (equivalent term of inverse filtering) are carried out using methods well-known to experts in the field, for example in frequencies.

As far as step (2) is concerned, $T_{PICK\ k}$ = direct arrival time of the signal in the seismic channel (k) or in the focalized track. Once the representative seismic channel index k has been established, this time is practically constant for the data of the same level acquired for a limited bit penetration (a few meters) and does therefore not depend on the index i. When the $t_{PICK\ k}$ has been determined, the aligned signal $c_{A\ ik}(t)$ is calculated, with a typical but non-limiting procedure, wherein the direct seismic arrival is represented by 0.0 seconds:

$$c_{A\ ik}\ (t)\ =\ c_{ik}\ (t-t_{PICK\ k}) \qquad (equ.3)$$

With respect to step (3), this consists in the optional representation of the data $c_{ik}(t)$, or preferably $c_{Aik}(t)$, of step (2), obtained with the subsequent measurements (i = 1, ..., N) at a constant depth in relation to the time t, and in the relative re-arrangement according to the values of the corresponding drilling parameters $w_{ij}$ with j = 1, ..., P. For each pre-selected parameter or combination of parameters there is a re-arrangement for increasing values of the parameter itself. For parameter number j, the re-arrangement is identified by i <--> h(i,j).

For example, three subsequent measurements of the data (A) are given, with i = 1,2,3. These measurements are obtained with the single parameter (B) which has values of 100, 200, 50. By re-arranging the measurements according to increasing values of this parameter, the result is h(3) = 1, h(1) = 2, h(2) = 3.

Considering, for the sake of simplicity, a single parameter, the re-arrangement for channel number k is given by $C_{ik}(t)$ ----- > $u_{hk}(t)$, or $c_{Aik}(t)$ ----- > $u_{Ahk}(t)$.

Before describing step (4), it should be remembered that, in the conventional procedure, the simple sum of the level data is given by:

$$SUM_{Aik}(t)\ =\ \Sigma_i\ c_{Aik}(t)\quad (i\ =\ 1,\ ...,N) \qquad (equ.4)$$

The total sums are obviously equal to each other

$$SUM_{Ak}(t)\ =\ \Sigma_i\ c_{Aik}(t)\ =\ \Sigma_h\ u_{Ahk}(t)\quad (i,h\ =\ 1,...,N)\ (equ.5).$$

From now on, the process of the present invention will refer, for the sake of simplicity, to aligned and arranged tracks (3). It is taken for granted, however, that the process can also be applied to non-aligned tracks (3).

Step (4) consists in the summing up of the tracks $u_{Ahk}(t)$ of step (3) on suitable subsets $\Lambda_q$ of H (q = 1, ...,Q), wherein H is the total of the values of the index h used in the arrangement of the measurements according to parameter number j. For example the subsets $\Lambda q$ can be selected so as to obtain a cumulative or partial sum. These sums can be indicated as $SUM_{Ak}^{(q)}$ (t), with q = 1, ...,Q.

Step (5) consists in measuring the Signal/Noise ratio (for simplicity S/N) effecting on tracks $SUM_{Ak}^{(q)}$ (t), with q = 1, ..., Q. When the track k has been selected, we have S/N = (S/N) (q) and the value q = $q_{max}$ is selected and is therefore $S/N(q_{max}) = S/N_{MAX}$.

In this way the subset $\Lambda_{MAX} = \Lambda$ (q = $q_{nax}$) is determined.

In fact, in a combination of several registrations obtained with variable parameters, there may be similar scattered signal and noise conditions with respect to the subsequent acquisition order. Phases 3 to 5 allow the evaluation of random noise levels (which is reduced in the sum), coherent noise levels (which can be reinforced in the sum) and signal levels, in groups of tracks selected with different arrangements in relation to the drilling parameters.

In other words, these arrangements and selection allow a better evaluation of the signal in groups with similar characteristics, whereas if the signal is collected in chronological order, it is possible "not to see" the correspondences. It is therefore possible, for example, to use the cumulative and partial sum of the re-arranged data. The term "cumulative" (or "progressive") sum refers to the sum of the signal relating to an increasing number of tracks which contribute to the final sum, or the sum with weights which give the final sum. The term "partial" sum refers to the sum of the signal relating to groups of a fixed number (for example 10) of tracks each time, or with weights which amplify the contribution of a fixed number of tracks each time.

Examples of combinations of $\Lambda_q$ indexes to be used for the cumulative sum of 100 re-arranged tracks, q = 1, ..., 10, are:

{1,2,3,...9,10}, {1,2,3,...19,20}, , ..., {1,2,3,...99,100}.

Examples of combinations of $\Lambda_q$ indexes to be used with the partial sum of 100 re-arranged tracks, q = 1, ..., 10, are:

{1,2,3,...9,10}, {11,12,13,...19,20}, , ..., {91,92,93,...99,100}.

In an alternative procedure, the subsets $\Lambda_q$ can be selected in ranges defined by maximum and minimum values of the parameter itself.

Furthermore, in a general procedure, the same analyses of the previous points can be effected by considering, instead of a single track representing the seismic line $u_{Ahk}(t)$ with k included in (1 ...,F), a track (focalized), aligned in turn, obtained with the sum of several tracks of the same line $U_{Fh}$ (t) = $\Sigma_k$ $U_{Ahk}$ (t).

With respect to the calculation of S/N in step (5), this consists in calculating the Signal/Noise ratios for time ranges (spans) selected for the tracks selected $U_{Ahk}(t)$ with h = 1, ...,N or $SUM_{Ak}^{(q)}(t)$. When the reference track (i.e. k) has been established, this time is practically constant. An estimate of the signal and noise levels can be obtained as follows: signal refers to the part near the direct arrival (which in aligned data is near the correlation zero), i.e. the part which has the maximum similitude between the datum registered by the pilot and the datum registered by the extension probe. The signal level is examined by measuring the energy in a suitably long time span, centered on the cross-correlation zero of the aligned signal, whereas the noise level is calculated, possibly after deconvolution, on suitably wide span for negative times of the aligned signal (anti-random part). In this noise span there are both random noise and coherent noise components resulting from the cross-correlation operation. On the basis of this, for the aligned $u_{Ahk}$ (t) or $SUM_{Ak}^{(q)}$ (t) data, the following times spans are selected:

for the Signal: $t_{S1,k} \leq t \leq t_{S2,k}$, with $t_{S1,k} \leq 0 < t_{S2,k}$;

for the Noise: $t_{R1,k} \leq t < t_{R2,k}$, with $t_{R1,k} \leq t_{R2,k} < 0$; calculating the average signal energy and average noise energy of the tracks, respectively given by:

$$\sigma^2{}_{Sk}{}^{(q)} = \Sigma_t \ (SUM_{Ak}{}^{(q)} \ (t))^2 / (t_{S2,k} - t_{S1,k}) \ (\text{sums with } t_{S1,k} \leq t \leq t_{S2,k})$$

$$\sigma^2{}_{Rk}{}^{(q)} = \Sigma_t (SUM_{Ak}{}^{(q)} (t))^2/(t_{R2,k} - t_{R1,k}) \text{ (sums with } t_{R1,k} \leq t$$

$$\leq t_{R2,k})$$

subsequently calculating the ratio between signal and noise $(S/N)^2{}_k{}^{(q)} = \sigma^2 sk^{(q)} /\sigma^2{}_{RK}{}^{(q)}$

Step (6) consists in summing up, limited to the indexes $\Lambda_{MAX}$ of point (5), the data $c_{hk}(t)$ selected for the given drilling parameter for the level obtained. The sum is thus limited to measurements with the $\Lambda_{MAX}$ indexes which optimize the S/N ratio of point (5). The signal of the F channels is obtained:

$$SUM^{(opt)}{}_k (t) = \Sigma_{\Lambda Max} u_{hk} (t), \text{ with } k = 1, ...,F \text{ and } \Lambda_{Max} = \Lambda(q$$

$$= q_{Max}), \text{ or equivalently for the same non-arranged tracks of}$$

$$\text{point (1).}$$

This selective sum is equivalent to obtaining the total sum with weights $\alpha_h$ selected from the set of integers [0,1]:

$$SUM^{(opt)}{}_k (t) = \Sigma_h = 1...N \, \alpha_h \, u_{hk} (t),$$

with

$$\alpha_h = 1 \text{ se } h \subset \Lambda_{Max}$$

As it is generally (at times) possible to determine, in some subsets, an empirical relation between the arranged parameter used and the S/N ratio, these weights can be selected so that $0 \leq \alpha_h \leq 1$ is in relation to the parameter itself and therefore to S/N to optimize the sum with known methods.

Step (7) refers to the possible calculation of the noise range with the partial or total range sum, the identification of the relative operating conditions and subsequent subtraction of the undesired signal from that selected with the optimum intersection. In fact, in the optimum range and complementary range, signal and noise are obtained with different amplitudes. For the parameter number j, the simplest means of procedure is for the complementary range to be given by the difference between the total sum and the optimum selective sum:

$$SUM^{(comp)}{}_k (t) = \Sigma_{(H-\Lambda Max)} \, u_{hk}(t) = SUM \, C_k(t) - SUM^{(opt)} (t).$$

Step (8) consists in the optional application of points 1-7 (or 1 to 6) at all drilling levels reached.

The process described above can be applied, when considered appropriate, to correlations between pilot signals (15 in figure 1) and pilot signals.

The process of the present invention has many advantages with respect to the processes of the prior art.

In fact it can also be applied using a single pilot channel (A) with a single seismic track (A).

In addition, it allows only the part of data having a high Signal/Noise ratio to be selected and summed up in the final data, thus obtaining a higher quality final result with respect to that obtained traditionally.

The process of the present invention is particularly advantageous with data in which the direct identification of the Signal/Noise ratio is not always possible, but can be associated with significant drilling conditions. This allows the final data to be improved with a consequent optimization of the geophysical monitoring. It also enables the SWD technique to be applied to operating contexts at present considered as not being optimum.

The results which can be obtained with the process of the present invention provide the prospect of using less noisy bits such as PDC (Polycrystalline Diamond Compact) bits and triconical bits.

In addition, it is possible to calculate the complementary signal (noise) and identify the operating conditions relating to this signal; subsequently the undesired signal can be subtracted from that selected with the optimum intersection R, thus reducing the residual noise to the maximum.

The following example is provided for a better understanding of the present invention.

EXAMPLE

This example illustrates the utility of the method applied on real data obtained with a PDC bit, which generates a signal which is typically difficult to use. The data consist of 100 registrations of 24 seconds obtained during acquisition at the same level depth at 1380 m/KB, during which the bit penetrated about 1 m.

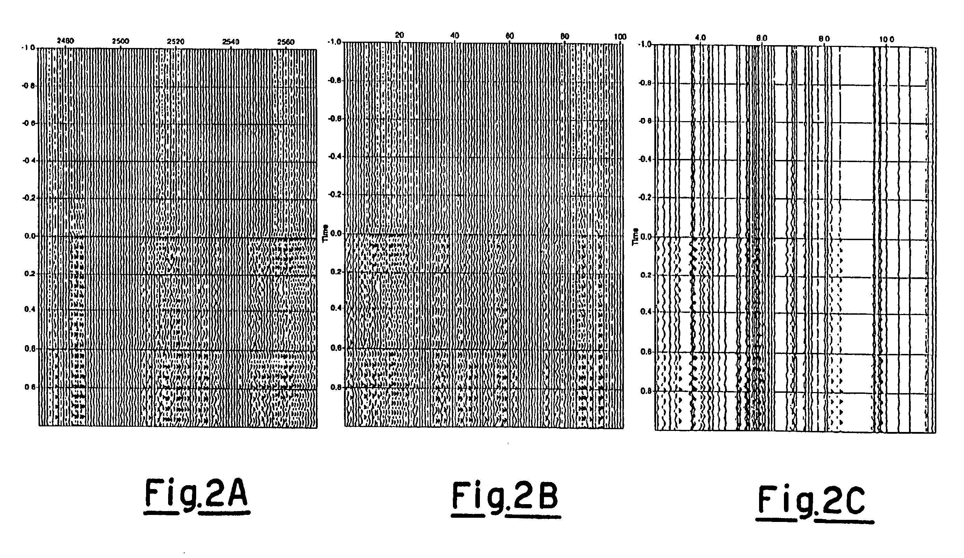

Figure 2 illustrates pitches 1 to 3. Figure 2A indicates the focalized and aligned tracks of correlated and deconvolved registrations provided by the 100 measurements sequentially repeated for the same depth (1380 m/KB).

Figure 2B illustrates the same 100 focalized tracks re-arranged with the ROP increasing drilling parameter. The horizontal scale is the sequential number of the re-arranged track.

Figure 2C indicates the same re-arranged tracks, in the horizontal scale of the ROP drilling parameter.

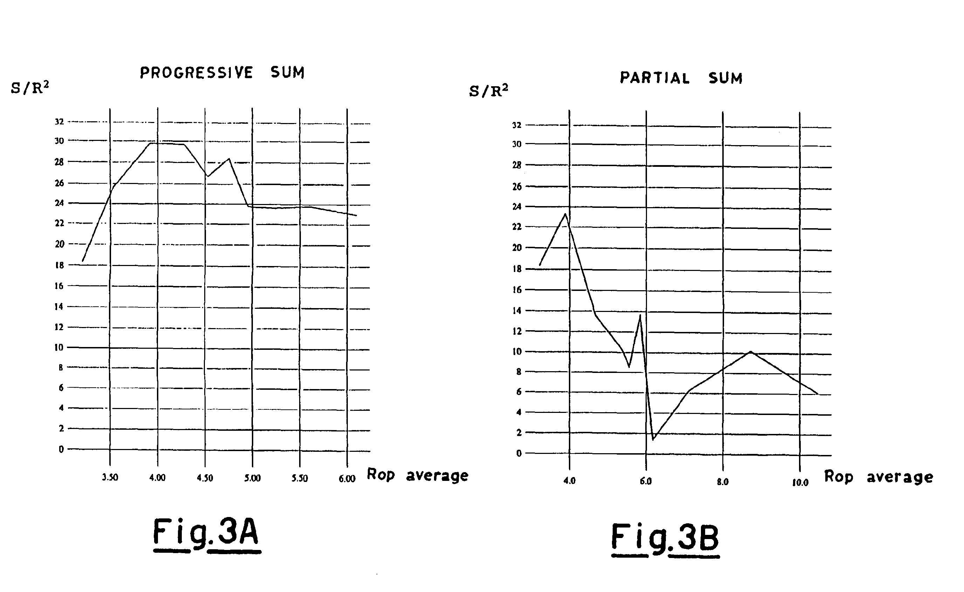

Figure 3 illustrates the results of steps 4 to 5. For example, the progressive and partial sums of the tracks illustrated in figure 2A with a pitch of 10 tracks. The ratio between signal energy and noise energy is calculated, selecting a span with respect to the aligned signal at 0.0 seconds for the signal, and a span with respect to the negative time data for the noise. The ratios between signal energy and noise energy for the progressive and partial sums are represented in figure 3A and 3B, respectively.

The result is that the optimum sum is given by adding the tracks up to ROP = 4.2 m/h.

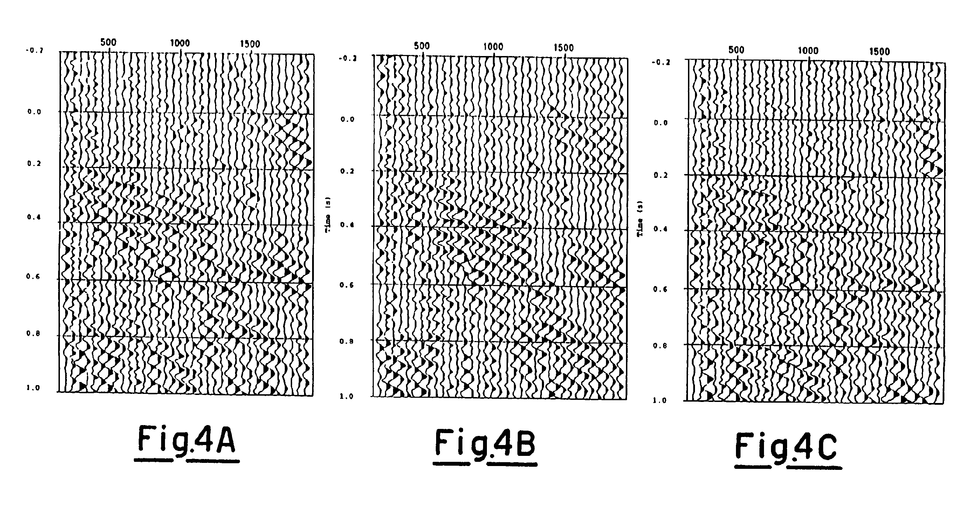

This result is applied in step 6 to the original deconvolved, correlated tracks. This provides a clearer identification of the signal. See figure 4, where the seismic tracks of the level 1380 m/KB are represented with respect to the well distance (offset).

Panel 4A indicates the result of the simple total sum, whereas figure 4B provides the result of the optimum sum. The reduction in the linear noise which extends from 0.2 seconds at low offsets to 1.0 seconds at high offsets, can be observed. Finally, figure 4C illustrates the range which allows a better identification of the noise obtained by summing the tracks for ROP values greater than 6 m/h.

**Claims**

1. A process for improving the Signal/Noise ratio in the preparation of vertical seismic profiles (VSP) which supply information on the gelogical formations of the subsoil subjected to drilling, using as seismic source signal the vibrations produced by the drilling bit adopted as seismic source; or representative measurement of the above seismic source signal (pilot signal) and the measurements of the signals transmitted into the ground and reflected on the layers (seismic signals) being effected by means of a series of receivers which form the seismic line, the above process comprising the practically simultaneous acquisition of:

   - seismic and pilot signals (A), cross-correlated with each other and optionally deconvolved, thus obtaining seismic tracks in which the signal is disturbed by noise;
   - drilling parameters (B) relating to the signals (A), **characterized in that**:

   the signals (A), obtained with repeated measurements for the same depth range, are partially or totally summed up by weight, on the basis of one or more drilling parameters (B), or combinations of the drilling parameters, thus obtaining an improvement in the signal with respect to noise, and a more distinct separation thereof.

2. The process according to claim 1, wherein the signals (A), before being partially or totally summed up, are re-arranged and analyzed according to one or more drilling parameters (B) or their combinations.

3. The process according to claim 1, wherein the drilling parameters (B) are those which describe the dynamic drilling conditions, and combinations.

4. The process according to claim 3, wherein the drilling parameters (B) are selected from torque, weight on bit, rate of penetration, rate of rotation, mud flow, and combinations.

5. The process according to claim 1, which comprises the following steps:

1) Cross-correlation of the seismic signals and pilot signal (A), collected by repeated measurements for the same depth range, and possible deconvolution of these, thus obtaining seismic tracks (1);

2) Identification of the arrival time of the direct wave from the bit in the tracks (1), the above identification being effected by selecting the tracks (1) of one or more channels of the seismic line, or using a representative channel synthesized from various channels of the seismic line (focalized signal), in order to obtain more representative tracks (2);

3) Arrangement, and optional representation, of the tracks (2), relating to a given drilling range, in accordance with the values of one or more of the corresponding drilling parameters (B) or combinations, for a certain drilling range, thus obtaining arranged tracks (3);

4) Channel by channel summing up with respect to appropriate subsets of the arranged tracks (3) thus obtaining summed-up tracks (4);

5) Measurement of the Signal/Noise ratio for the summed-up tracks (4) and identification, among the subsets of point (4), of subset (s) forming the maximum value of the Signal/Noise ratio;

6) Summing up, channel by channel and for the same depth range, of the tracks of point (2) or equivalently of point (1) according to the subsets identified in step (5), thus obtaining the optimum sum;

7) Possible calculation of the noise range with the partial or total sum of the complementary range and identification of the associated operating conditions; possible subsequent subtraction of undesired noise, identified from the complementary range, from the signal selected with the optimum sum of (6), thus reducing the residual noise to the maximum.

6. The process according to claim 5, wherein the tracks (2) are aligned according to the times identified in step 2, the aligned tracks thus obtained being used in the subsequent step (3).

7. The process according to claim 5, wherein steps 1 to 6 or 1 to 7 are applied to various drilling levels.

**Patentansprüche**

1. Verfahren zur Verbesserung des Signal/Rauschen-Verhältnisses bei der Erstellung vertikaler seismischer Profile (VSP), die Informationen über geologische Formationen im Untergrund liefern, die erbohrt werden, wobei als seismisches Quellensignal die Vibrationen, die durch den als seismische Quelle eingesetzten Bohrmeißel erzeugt werden, eine charakteristische Messung des seismischen Quellensignals (Pilotsignal) und die Messungen der Signale, die in das Erdreich ausgesendet und an den Schichten reflektiert werden (seismische Signale) und mit Hilfe einer Reihe von Empfängern durchgeführt werden, die die seismische Linie bilden, verwendet werden, wobei das obige Verfahren die praktisch simultane Erfassung von:

   - seismischen und Pilotsignalen (A), die miteinander kreuzkorreliert und optional dekonvolutiert sind, wodurch seismische Spuren erhalten werden, in welchen das Signal durch Rauschen gestört ist;
   - Bohrparametern (B), die mit den Signalen (A) in Beziehung stehen, umfasst,

   **dadurch gekennzeichnet,**
   **dass** die Signale (A), die durch wiederholte Messungen für den gleichen Tiefenbereich erhalten werden, auf der Basis eines Bohrparameters oder mehrerer Bohrparameter (B) oder von Kombinationen der Bohrparameter teilweise oder vollständig gewichtet aufsummiert werden, wodurch eine Verbesserung des Signals in Bezug auf das Rauschen und eine bessere Trennung der beiden erhalten wird.

2. Verfahren nach Anspruch 1, wobei die Signale (A) gemäß einem oder mehrerer Bohrparameter (B) oder Kombinationen davon neu geordnet und analysiert werden, bevor sie teilweise oder vollständig aufsummiert werden.

3. Verfahren nach Anspruch 1, wobei die Bohrparameter (B) solche, die die dynamischen Bohrbedingungen beschreiben, und Kombinationen sind.

4. Verfahren nach Anspruch 3, wobei die Bohrparameter (B) aus einem Drehmoment, einem Gewicht auf dem Meißel, einer Eindringrate, einer Rotationsrate, einem Schlammfluss und Kombinationen ausgewählt werden.

5. Verfahren nach Anspruch 1, welches die folgenden Schritte umfasst:

   1) Kreuzkorrelation der seismischen Signale und des Pilotsignals (A), die durch wiederholte Messungen für den gleichen Tiefenbereich gesammelt werden, und deren etwaige Dekonvolution, wodurch seismische Spuren (1) erhalten werden;

2) Identifizierung der Einsatzzeit der direkten Welle von dem Meißel in den Spuren (1), wobei die obige Identifizierung durch Wählen der Spuren (1) eines Kanals oder mehrerer Kanäle der seismischen Linie oder unter Verwendung eines charakteristischen Kanals, der aus verschiedenen Kanälen der seismischen Linie synthetisiert wird (fokussiertes Signal), durchgeführt wird, um charakteristischere Spuren (2) zu erhalten;

3) Anordnung und optionale Darstellung der Spuren (2) für einen bestimmten Bohrbereich, die in Beziehung mit einem gegebenen Bohrbereich stehen, in Übereinstimmung mit den Werten eines oder mehrerer der entsprechenden Bohrparameter (B) oder Kombinationen, wodurch angeordnete Spuren (3) erhalten werden;

4) kanalweises Aufsummieren im Bezug auf geeignete Teilsätze der angeordneten Spuren (3), wodurch aufsummierte Spuren (4) erhalten werden;

5) Messung des Signal/Rauschen-Verhältnisses der aufsummierten Spuren (4) und Identifizierung eines Teilsatzes oder mehrerer Teilsätze aus den Teilsätzen von Punkt (4), der (die) den Maximalwert des Signal/Rauschen-Verhältnisses bildet (bilden);

6) kanalweises Aufsummieren für den gleichen Tiefenbereich der Spuren von Punkt (2) oder in äquivalenter Weise von Punkt (1) gemäß der in Schritt (5) identifizierten Teilsätze, wodurch die optimale Summe erhalten wird;

7) etwaige Berechnung des Rauschbereichs mit der teilweisen oder vollständigen Summe des komplementären Bereichs und Identifizierung der zugehörigen Betriebsbedingungen; etwaige anschließende Subtraktion unerwünschten Rauschens, das in dem komplementären Bereich identifiziert wurde, von dem Signal, das mit der optimalen Summe von (6) gewählt wurde, wodurch das Restrauschen maximal reduziert wird.

**6.** Das Verfahren nach Anspruch 5, wobei die Spuren (2) gemäß der in Schritt 2 identifizierten Zeiten angepasst werden und die **dadurch** erhaltenen angepassten Spuren in dem anschließenden Schritt (3) verwendet werden.

**7.** Verfahren nach Anspruch 5, wobei die Schritte 1 bis 6 oder 1 bis 7 auf verschiedene Bohrniveaus angewandt werden.

## Revendications

**1.** Procédé pour améliorer le rapport signal/bruit lors de l'élaboration de profils sismiques verticaux (PSV) qui fournissent des informations sur les formations géologiques du sous-sol dans lequel est réalisé un forage, en utilisant comme signal de source sismique les vibrations produites par l'outil de forage servant de source sismique ; une mesure représentative dudit signal de source sismique (signal pilote) et les mesures des signaux émis vers le sous-sol et réfléchis par les couches (signaux sismiques) étant effectuées à l'aide d'une série de récepteurs qui forment le profil sismique, ledit procédé comprenant l'acquisition sensiblement simultanée de :

- signaux sismiques et pilote (A), en corrélation croisée les uns avec les autres et éventuellement en déconvolution, ce qui donne donc des traces sismiques dans lesquelles le signal est perturbé par le bruit ;
- paramètres de forage (B) concernant les signaux (A),

**caractérisé en ce que** :

les signaux (A), obtenus en répétant des mesures à une profondeur du même ordre de grandeur, sont partiellement ou totalement additionnés en poids, sur la base d'un ou de plusieurs paramètres de forage (B), ou de combinaisons des paramètres de forage, ce qui permet donc d'obtenir une amélioration du signal par rapport au bruit, et une séparation plus distincte de ceux-ci.

**2.** Procédé selon la revendication 1, dans lequel les signaux (A), avant d'être partiellement ou totalement additionnés, sont réorganisés et analysés en fonction d'un ou de plusieurs paramètres de forage (B) ou des combinaisons de ceux-ci.

**3.** Procédé selon la revendication 1, dans lequel les paramètres de forage (B) sont ceux qui décrivent les conditions dynamiques du forage, et les combinaisons de ceux-ci.

**4.** Procédé selon la revendication 3, dans lequel les paramètres de forage (B) sont choisis parmi le couple, le poids agissant sur l'outil de forage, la vitesse de pénétration, la vitesse de rotation, le débit de la boue, et leurs combinaisons.

**5.** Procédé selon la revendication 1, comprenant les étapes consistant à :

1) réaliser une corrélation croisée des signaux sismiques et du signal pilote (A), recueillis en répétant des mesures à des profondeurs du même ordre de grandeur, et éventuellement une déconvolution de ceux-ci, ce qui donne donc des traces sismiques (1) ;

2) identifier dans les traces (1) l'instant d'arrivée de l'onde directe venant de l'outil, l'identification ci-dessus s'effectuant en sélectionnant les traces (1) d'un ou de plusieurs canaux du profil sismique, ou en utilisant un canal représentatif synthétisé à partir de divers canaux du profil sismique (signal focalisé), afin d'obtenir des traces plus représentatives (2) ;

3) organiser, et éventuellement représenter, les traces (2), par rapport à une série de forages donnée, conformément aux valeurs d'un ou de plusieurs des paramètres de forage correspondants (B) ou de leurs combinaisons, pour une certaine série de forages, ce qui donne donc des traces organisées (3) ;

4) additionner les canaux les uns aux autres par rapport à des sous-ensembles appropriés des traces organisées (3), ce qui donne donc des traces additionnées (4) ;

5) mesurer le rapport signal/bruit pour les traces additionnées (4) et identifier, parmi les sous-ensembles du point (4), un ou plusieurs sous-ensembles formant la valeur maximale du rapport signal/bruit ;

6) additionner, canal après canal et pour des profondeurs du même ordre de grandeur, les traces du point (2) ou de manière équivalente du point (1) d'après les sous-ensembles identifiés lors de l'étape (5), ce qui donne donc la somme optimale ;

7) calculer éventuellement l'intervalle de bruit avec la somme partielle ou totale de l'intervalle complémentaire et identifier les conditions de fonctionnement correspondantes ; soustraire ensuite éventuellement le bruit indésirable, identifié d'après l'intervalle complémentaire, du signal choisi avec la somme optimale de (6), en réduisant ainsi le plus possible le bruit résiduel.

**6.** Procédé selon la revendication 5, dans lequel les traces (2) sont alignées d'après les instants identifiés lors de l'étape 2, les traces alignées ainsi obtenues étant utilisées lors de l'étape (3) suivantes.

**7.** Procédé selon la revendication 5, dans lequel les étapes 1 à 6 ou 1 à 7 sont appliquées à divers niveaux de forage.

# Fig.1

Fig.2A  Fig.2B  Fig.2C

PARTIAL SUM

$S/R^2$

Rop average

**Fig.3B**

PROGRESSIVE SUM

$S/R^2$

Rop average

**Fig.3A**

Fig.4A

Fig.4B

Fig.4C

**EP 1 046 930 B1**

REFERENCES CITED IN THE DESCRIPTION

**Patent documents cited in the description**

- US 4965774 A
- US 4862423 A
- US 4954998 A
- US 4964087 A
- US 4718048 A
- US 5050130 A
- US 5511038 A
- US 4922362 A, Schlumberger